Europäisches Patentamt

European Patent Office

Office européen des brevets

(11) Veröffentlichungsnummer: **0 024 283**
**A1**

## EUROPÄISCHE PATENTANMELDUNG

(21) Anmeldenummer: 80103292.1

(51) Int. Cl.³: **B 60 L 3/00**

(22) Anmeldetag: **12.06.80**

(30) Priorität: **28.06.79 DE 2926132**

(43) Veröffentlichungstag der Anmeldung: **04.03.81**
**Patentblatt 81/9**

(84) Benannte Vertragsstaaten: **AT CH GB LI NL**

(71) Anmelder: **SIEMENS AKTIENGESELLSCHAFT Berlin
und München, Postfach 22 02 61,
D-8000 München 22 (DE)**

(72) Erfinder: **Franzen, Horst, Bergstrasse 22,
D-8551 Hemhofen (DE)**
Erfinder: **Rothmeier, Wolfgang,
Paul-Gossen-Strasse 119, D-8520 Erlangen (DE)**

(54) **Fehlererfassung bei elektronischen Fahrzeugsteuerungen.**

(57) Bei der Erfassung von fehlerhaften Zuständen, die bei elektronischen Fahrzeugsteuerungen auftreten, werden als Langzeitspeicher ausgebildete Speicher (7, 15) verwendet, deren gespeicherte Signale auch über das Abschalten des Fahrzeuges hinaus erhalten bleiben. Auf diese Weise ist es dem Wartungspersonal in der Werkstatt möglich, einen Fehler in einfacher Weise zu lokalisieren.

EP 0 024 283 A1

0024283

SIEMENS AKTIENGESELLSCHAFT      Unser Zeichen

Berlin und München              VPA 79 P 3 0 9 3 EUR

**Fehlererfassung bei elektronischen Fahrzeugsteuerungen**

Die Erfindung bezieht sich auf eine Anordnung zum Erfassen von fehlerhaften Zuständen, die bei elektronischen Fahrzeugsteuerungen auftreten, unter Verwendung einer Überwachungseinrichtung, die eine Fehlermeldung an Speicher und Meldeeinrichtungen gibt.

Bei der Stadtbahn Düsseldorf sind Anordnungen dieser Art - wie noch ausgeführt wird - bereits eingesetzt worden.

Mit dem ständig zunehmenden Sicherheitsbedürfnis, der Wartungsarmut und dem Fahrkomfort für die Fahrzeuge der Nahverkehrstechnik steigt im besonderen Maße auch die Komplexität der Steuerungstechnik. Bei Störungen sind die Angaben des Fahrpersonals wegen der fehlenden technischen Fachkundigkeit und dem hinzukommenden Überraschungsmoment beim Auftreten einer Störung nicht aussagekräftig genug, um den Fehler zu erkennen. Hinzu kommt, daß einige Fehler temperaturabhängig sind bzw.

Nr 2 Po /25.06.1979

0024283

nur sporadisch auftreten. Dies stellt das Wartungspersonal immer wieder vor neue Probleme bei der Fehlererkennung und Fehlerortung.

Die bei der Stadtbahn Düsseldorf eingesetzten Wagensteuergeräte enthalten eine Reihe von Überwachungseinrichtungen, die beim Auftreten eines Fehlers Anzeigeeinrichtungen in den Wagensteuergeräten zum Ansprechen
bringen. Aus den Wagensteuergeräten wird eine Sammelmeldung auf die Störmeldeeinrichtung des Fahrzeuges
gegeben. Dies bedingt, daß die Fehleranzeige beim nachfolgenden Abschalten des Fahrzeuges erlischt und damit
bei der sich anschließenden Untersuchung in der Werkstatt nicht mehr zur Verfügung steht. Dadurch wird besonders bei sporadisch auftretenden Fehlern das Auffinden der Störungsursache erschwert. Außerdem kommt
es beim Ansprechen einer Überwachungsfunktion eventuell
zu Folgemeldungen durch das mechanische Abbremsen des
Fahrzeuges (z.B. zu einer Überbremsung bei schlechtem
Schienenzustand und damit zu einer Störungsanzeige der
Drehzahlerfassung).

Aufgabe der Erfindung ist es, eine Anordnung anzugeben,
mit der Zeit und Kosten für die Störungssuche an elektrischen Nahverkehrsfahrzeugen verringert werden können.

Die Lösung dieser Aufgabe besteht bei einer Anordnung
der eingangs genannten Art erfindungsgemäß darin, daß
die Speicher als Langzeitspeicher ausgebildet sind,
deren gespeicherte Signale auch über das Abschalten
des Fahrzeuges hinaus erhalten bleiben, und daß nach
Speicherung der ursächlichen Fehlermeldung eine Speicherung von Folgefehlermeldungen gesperrt wird.

Auf diese Weise ist dem Wartungspersonal in der Werkstatt eine rasche Lokalisierung einer Fehlerursache möglich. Dadurch ergeben sich geringere Standzeiten für die Fahrzeuge und damit eine größere Verfügbarkeit der Fahrzeuge. Die Speicherung erfolgt zweckmäßigerweise über bistabile Relais, kann jedoch auch mit nicht flüchtigen Halbleiterspeichern durchgeführt werden.

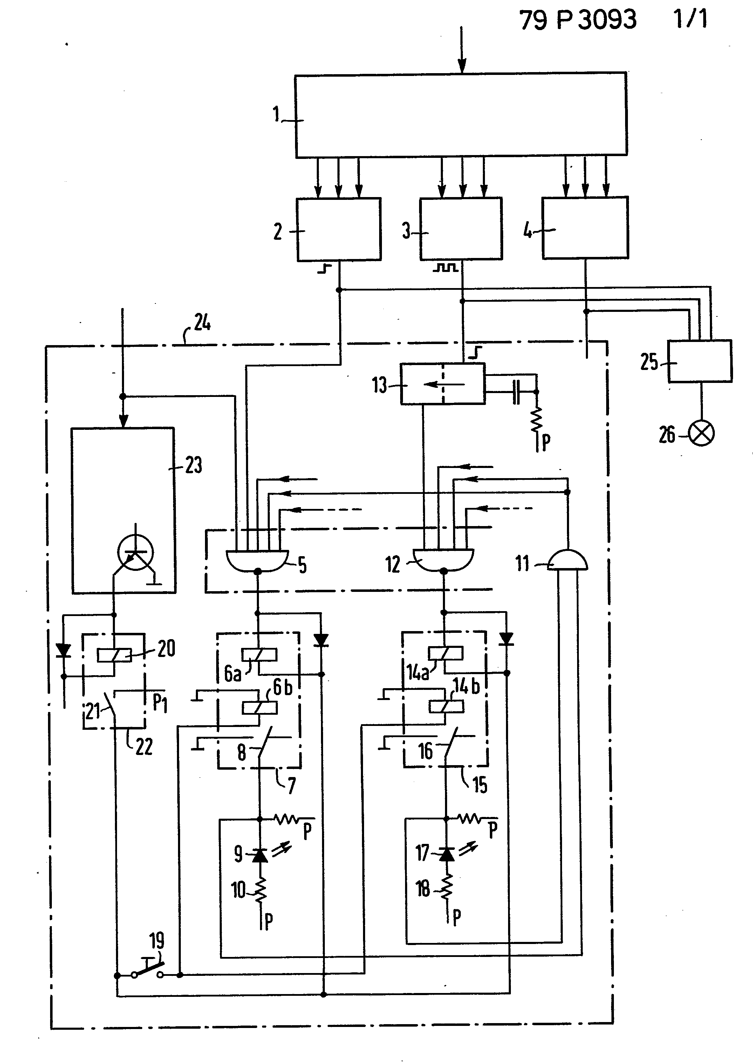

Ein Ausführungsbeispiel der Erfindung ist in der Zeichnung dargestellt.

In der Figur ist eine Fahr-Bremssteuereinrichtung 1 eines Fahrzeuges gezeigt, aus der Betriebszustandssignale abgenommen und Überwachungseinrichtungen 2, 3, 4 zugeführt werden. Auf die Überwachungseinrichtung 2 wird ein Bremsstromsignal, ein Geschwindigkeitssignal und ein Bremsbefehlssignal gegeben. Bei Aufbau der ordnungsgemäßen Bremsschaltung innerhalb einer vorgegebenen Zeit gibt die Überwachungseinrichtung 2 kein Ausgangssignal ab, d.h. in der Fahr-Bremssteuereinrichtung 1 ist kein Fehler aufgetreten.

An die Überwachungseinrichtung 3 werden von der Fahr-Bremssteuereinrichtung 1 Achsdrehzahl-Impulssignale der Achsen des Fahrzeuges abgegeben. Kommt es nicht zu Impulsausfällen, so steht am Ausgang ein getaktetes Signal an.

Von der Fahrbrems-Steuereinrichtung 1 werden ferner ein Fahrbefehlssignal und ein Sollwertübertragungssignal an die Überwachungseinrichtung 4 gegeben. Wird der Sollwert ordnungsgemäß übertragen, so ist das Ausgangssignal der Überwachungseinrichtung 4 Null.

Kommt es an der Überwachungseinrichtung 2 zu einer Fehlermeldung (1-Signal), so wird über die eine Logik 5 (NAND-Glied) enthaltende Einrichtung bei vorhandener Freigabe ein als Langzeitspeicher ausgebildeter Speicher angesteuert, dessen gespeichertes Signal auch über das Abschalten des Fahrzeuges hinaus erhalten bleibt. Ist der Langzeitspeicher als bistabiles Relais 7 ausgebildet, so wird über die Logik 5 die Spule 6a eines bistabilen Relais 7 angesteuert, welches zum Schließen des Kontaktes 8 führt. Dadurch liegt die Leuchtanzeigeeinrichtung 9 (Lumineszenzdiode) über den Vorwiderstand 10 an Spannung. Damit ist die Fehlermeldung abgespeichert und sperrt über die Auswahl 11 (UND-Glied) die Freigabelogik 12 (NAND-Glied) für weitere Speicherungen von Folgefehlermeldungen.

Die Überwachungseinrichtung 3 arbeitet aus Sicherheitsgründen mit einem getakteten Ausgangssignal, wenn kein Fehler in der Fahr-Brems-Steuereinrichtung vorliegt. Tritt ein Fehler auf, so verbleibt das Signal in einem statischen Zustand (kein Signal oder Dauersignal). Der Ausgang der Überwachungseinrichtung ist mit einer monostabilen Kippstufe 13 verbunden, die bei Anstehen eines statischen Signals nicht mehr getriggert wird. Damit wechselt das Ausgangssignal auf ein 1-Signal (Dauer-Signal) und über die Freigabelogik 12 (NAND-Glied) wird bei vorhandener Freigabe die Spule 14a eines bistabilen Relais 15 angesteuert, welches zum Schließen des Kontaktes 16 führt. Dadurch liegt die Leuchtanzeige 17 über den Vorwiderstand 18 an Spannung. Damit ist die Fehlermeldung abgespeichert und sperrt über die Auswahl 11 die Logik 5 für die weitere Speicherung von Folgefehlermeldungen.

Die zur Fehlerspeicherung dienenden Bauelemente sind zu einer Fehlerspeichereinheit 24 zusammengefaßt, die
im Wagensteuergerät mit untergebracht ist.

Die Meldungen der Überwachungseinrichtungen 2, 3 und 4
werden über einen Verknüpfungsbaustein 25 einer Anzeigevorrichtung 26 für den Fahrer zugeführt.

Die Erregerspulen der bistabilen Relais 7 bzw. 15 liegen
über eine Spannungskontrolleinrichtung 23 an Spannung,
die bei Ausfall oder Absenkung der Versorgungsspannung
für eine Logik-Glieder 5, 12 enthaltende Einrichtung
der Langzeitspeicher abgeschaltet wird.

Erhält der Fahrer eine Fehlermeldung, so wird das Fahrzeug der Werkstatt zugeführt und außer Betrieb gesetzt.
Das Wartungspersonal schaltet zur Überprüfung das Wagensteuergerät an Spannung und erkennt am Aufleuchten einer
der Leuchtanzeigevorrichtungen 9 oder 17 in welchem Bereich der Fahrzeugausrüstung der Fehler zu suchen ist.

Um ein falsches Abspeichern beim Abschalten bzw. beim
Ausfall des Wagensteuergerätes zu verhindern, wird über
eine Spannungskontrolleinrichtung 23 die Spule 20 eines
Relais 22 betätigt und damit die Versorgungsspannung zu
den Spulen 6a und 14a der bistabilen Relais 7 und 15
unterbrochen, so daß ein Speichersignal durch undefinierte Wegnahme der Versorgungsspannung nicht mehr gegeben werden kann. Dadurch kann das Steuergerät beliebig
ein- bzw. ausgeschaltet werden. Nach jedem Einschalten
steht die Meldung wieder zur Verfügung. Wartungsbehaftete Elemente zur Erhaltung der Speicherung werden nicht
benötigt. Die Speichereinheit kann sogar dem Geräte
entnommen und später wieder eingebaut werden, ohne daß
es zum Informationsverlust kommt.

Durch Betätigen der Löschtaste 19 wird auf die Spulen
6b und 14b Spannung gegeben, wodurch das jeweilige
Relais 7 bzw.  15 in seine Ausgangslage zurückgesetzt
und damit die Speicherung aufgehoben wird.

0024283

VPA 79 P 3093 EUR

1 Fahr-Brems-Steuereinrichtung
2 Überwachungseinrichtung
3 Überwachungseinrichtung
4 Überwachungseinrichtung
5 Logik (NAND-Glied)
6a Spule
6b Spule
7 bistabiles Relais
8 Kontakt
9 Leuchtanzeigeeinrichtung
10 Vorwiderstand
11 Auswahl (UND-Glied)
12 Freigabelogik (NAND-Glied)
13 monostabile Kippstufe
14a Spule
14b Spule
15 bistabiles Relais
16 Kontakt
17 Leuchtanzeige
18 Vorwiderstand
19 Löschtaste
20 Spule
21 Kontakt
22 Relais
23 Spannungskontrolleinrichtung
24 Fehlerspeichereinheit
25 Verknüpfungsbaustein
26 Anzeigevorrichtung

Patentansprüche

1. Anordnung zum Erfassen von fehlerhaften Zuständen, die bei elektronischen Fahrzeugsteuerungen auftreten, unter Verwendung einer Überwachungseinrichtung, die eine Fehlermeldung an Speicher und Meldeeinrichtungen gibt, d a d u r c h   g e k e n n z e i c h n e t , daß die Speicher als Langzeitspeicher ausgebildet sind, deren gespeicherte Signale auch über das Abschalten des Fahrzeuges hinaus erhalten bleiben und daß nach Speicherung der ursächlichen Fehlermeldung eine Speicherung von Folgefehlermeldungen gesperrt wird.

2. Anordnung nach Anspruch 1, d a d u r c h   g e - k e n n z e i c h n e t , daß die Langzeitspeicher über eine Spannungskontrolleinrichtung (23) an Spannung liegen, die bei Ausfall oder Absenkung der Versorgungsspannung für eine Logik-Glieder (5,12) enthaltende Einrichtung der Langzeitspeicher abgeschaltet wird.

3. Anordnung nach Anspruch 1 oder 2, d a d u r c h   g e k e n n z e i c h n e t , daß als Langzeitspeicher bistabile Relais (7, 15) dienen.

79 P 3093 1/1

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A - 2 415 316 (SIEMENS A.G.)<br>* Seite 8, Zeilen 1-14 *<br><br>-- | 1,3 |
| | BBC-Nachrichten, vol. 59,<br>no. 5, Mai 1977,<br>Mannheim, DE<br>DRESSLER, H. et al. "Diagnosegerät für elektronische Loksteuerung",<br>Seiten 178-183.<br>* Seite 183, linke Spalte *<br><br>-- | 1 |
| A | US - A - 4 005 601 (AMAC INC.)<br>* Spalte 5, Zeilen 35-52;<br>Abbildung 6 *<br><br>-- | 1 |
| A | US - A - 3 623 087 (THE MOSLER SAFE COMP.)<br>* Spalte 2, Zeilen 59-75 *<br><br>-- | 1 |
| A | US - A - 3 582 925 (BETA CORP.)<br>* Spalte 10, Zeilen 10-54;<br>Abbildung 5 *<br><br>---- | 1 |

**KLASSIFIKATION DER ANMELDUNG (Int. Cl.³)**

B 60 L 3/00

**RECHERCHIERTE SACHGEBIETE (Int. Cl.³)**

B 60 L 3/00
G 08 B 25/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 29-09-1980 | WEIHS |

EPA form 1503.1  06.78